# EUROPEAN PATENT SPECIFICATION

(11) **EP 3 543 550 B1**
(45) Date of publication and mention of the grant of the patent: **05.04.2023**
(21) Application number: 18461539.1
(22) Date of filing: 22.03.2018
(51) Int. Cl.: F16B 5/06, F28F 9/00

(54) **HEAT EXCHANGER**
WÄRMETAUSCHER
ÉCHANGEUR DE CHALEUR

(43) Date of publication of application: 25.09.2019
(73) Proprietor: Valeo Autosystemy SP. Z.O.O., 32-050 Skawina (PL)
(72) Inventor: BELZOWSKI, Michal, PL 32-050 Skawina (PL); POKRYWINSKI, Karol, PL 32-050 Skawina (PL); SZOSTEK, Dawid, PL 32-050 Skawina (PL); SZCZECH, Sebastian, PL 32-050 Skawina (PL)
(74) Representative: Valeo Systèmes Thermiques

(56) References cited:
- EP-A2- 1 464 909
- WO-A1-2005/103597
- WO-A2-2008/086489
- JP-A- H08 159 686

## Description

### FIELD OF INVENTION

The present invention relates to a heat exchanger, in particular a heat exchanger with improved means for attaching it to an external structure such as a vehicle.

### BACKGROUND OF INVENTION

Different methods of attaching a heat exchanger to a vehicle are known from the state of art. Various solutions like racks, boxes, attaching points brazed directly to a core of the heat exchanger, etc., are used to provide attaching points between the heat exchanger and the vehicle. Very often additional components like pipe clamps, rubber dampers and positioning pins must be fixed in an area next to the heat exchanger. Due to complex geometry of the heat exchanger additional parts made from plastic are used to provide fixing points for the heat exchanger and supporting parts.

For example, one prior art solution is known from WO 2016/005413. This solution comprises a mounting assembly, which is attached at its two attaching arms to two opposing sides of the heat exchanger. A plate extends between the attaching arms and is parallel to a narrower side of the heat exchanger. The plate comprises connecting means for attaching it to the structure of a vehicle. However, the heat exchanger equipped with such mounting assembly must be mounted vertically, because if such a heat exchanger is installed otherwise, its mass and the resulting corresponding torques would damage the mounting assembly. Moreover, this mounting assembly is costly and difficult to manufacture.

Another example of a mounting assembly for a heat exchanger includes a ring, which surrounds a core of the heat exchanger. One purpose of the ring is to keep all components of the core together, while the other is to provide fixing points for attaching the heat exchanger to the vehicle. Examples of such mounting assemblies are known from DE102015208988, DE102015213691A1 and US20140176412. The ring may be quite bulky and, therefore, this solution is not always suitable for applications where a small amount of mounting space is available.

WO2008086489A2 discloses a zone-control unit for use in a heating, ventilation, and air conditioning (HVAC) system, the zone-control unit includes a heat exchanger, an inlet piping assembly coupled with the heat exchanger for supplying fluid to the heat exchanger, an outlet piping assembly coupled with the heat exchanger for receiving fluid from the heat exchanger, a bracket that maintains the inlet piping assembly and the outlet piping assembly in positional relationship, and an ancillary component coupled with the heat exchanger.

EP1464909A2 discloses a self-locking bracket for fastening on U-shaped thin-walled profile and in particular for fastening on U-shaped side support of a motor vehicle radiator cooling core. The bracket has a form of a single-element shape and comprises elastic locking element, elastic abutting element and a blocking element, for fixing the bracket position in mounting slots parallel to the web surface of the side support.

WO2005103597A1 discloses a mounting bracket for securing a component such as a heat exchanger, including a unitary first bracket member including a first plate portion having a first section for securing to the component, and a second plate portion having a second section for securing to the component, and an intermediate plate portion, the first, second and intermediate plate portions defining a central space therebetween; and a separately formed second bracket member mounted to the first bracket member and having a central portion extending at least partially across the central space, the bracket member including engagement members extending outward from the central portion and engaging the first bracket member thereby securing the second bracket member to the first bracket member, the central portion defining a mounting opening there through. During brazing the second bracket member is not braze-clad to ensure the mounting opening is not distorted or altered by braze flow.

JPH08159686A discloses a mount fitment which is mounted between extensions. The mount fitment is formed by pressing a metal plate shaped member, i.e., integrally forming a mount piece on a vertical plate of an inverted U shaped member. A second bolt insertion hole is drilled through an upper plate being a first plate shaped part of the inverted U shaped member 121 and a lower plate being a second plate shaped part. There is further formed through the mount piece a bolt insertion hole for mounting a laminate heat exchanger at a predetermined location of an automobile body. In such a manner, the mount fitment is provided immediately on a side surface without passing through the laminate heat exchanger so that an air stream is prevented from being obscured by the mount fitment.

As outlined above, the mounting assemblies known from the state of art suffer from many drawbacks. Namely, the prior art mounting assemblies are heavy, expensive and are made up of many parts. Moreover, very often they can be mounted only in one position, which limits their usefulness.

### AIM OF INVENTION

Therefore, one aim of the present invention is to provide a heat exchanger with improved mounting assembly, which is simple, easy to install and cost effective.

Another aim of the present invention is to provide a heat exchanger, which can be mounted in different positions.

### DISCLOSURE OF INVENTION

A heat exchanger according to the present invention is disclosed in claim 1.

Advantageous embodiments of the present invention are defined in dependent claims.

The heat exchanger according to the present invention has a simplified structure and its attachment to a frame of a vehicle is highly facilitated. Moreover, as the heat exchanger comprises the mounting assembly with a limited number of parts it takes up less space and is lighter.

Mounting of the heat exchanger assembly according to the present invention can be divided into two steps. Firstly, the first mounting plate is attached first to the core. Once it is done the second mounting plate is connected to the first mounting plate. Additionally, if the second mounting plate is damaged a technical can easily replace only this part of the heat exchanger, without having to replace the whole heat exchanger.

One of the first and second mounting plates can be more susceptible to changes in design. For example, the first mounting plate can be made of aluminum and be relatively simple in shape, while the second mounting plate can be made of plastic material and, therefore, can easily be provided with many additional features. This reduces significantly the costs and the complexity of the manufacturing process.

### BRIEF DESCRIPTION OF DRAWINGS

The present invention will be described in more detail below, with reference to the accompanying drawings, which present non-limiting embodiments of the invention, in which:
Fig. 1 shows a perspective view of a heat exchanger according to the present invention;
Fig. 2 shows a perspective exploded view of one embodiment according to the present invention of a mounting assembly;
Fig. 3 shows a perspective exploded view of an another embodiment according to the present invention of the mounting assembly;
Fig. 4 shows a perspective exploded view of a non claimed example of the mounting assembly;
Fig. 5 shows a perspective exploded view of a non claimed example of the mounting assembly, and
Fig. 6 shows a perspective exploded view of another embodiment according to the present invention of the mounting assembly.

### DETAILED DESCRIPTION OF INVENTION

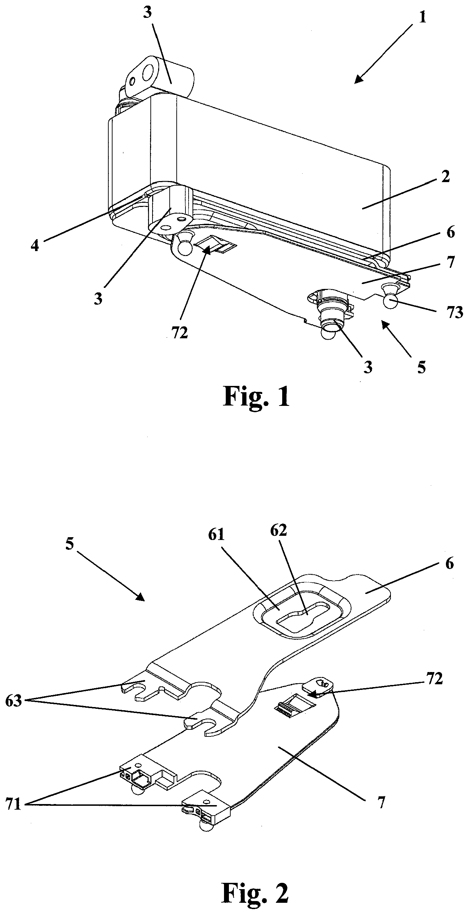

Fig. 1 shows a heat exchanger 1, which has the overall form of a cuboid, but other forms are also possible. Generally, the heat exchanger 1 comprises a core 2, which defines two fluid circuits for a coolant and a fluid to be cooled down, namely a first fluid circuit and second fluid circuit. Both fluid circuits are in contact with each other so that, when both fluids flow through the respective circuits, heat exchange between fluids takes place.

The core 2 of the heat exchanger 1 can be of any type known from the state of art. For example, the core 2 can comprise a plurality of shaped plates, which delimit therebetween one of the fluid circuits. The core 2 can further comprise a plurality of flat hollow flow tubes, which are placed between the shaped plates and define the other of the fluid circuits. Heat exchange occurs at the interface between both fluid circuits.

In another example, the core 2 comprises a plurality of flat hollow tubes, which define one of the fluid circuits, and a housing, which encloses the flat follow tubes and defines the other of the fluid circuits.

The heat exchanger 1 further comprises a series of inlet and outlet ports 3, which are used to deliver both fluids to and out of the fluid circuits.

According to the present invention the heat exchanger 1 is provided at one of its sides, preferably at its flat underside 4, with a mounting assembly 5. The mounting assembly 5 comprises a first mounting plate 6 and a second mounting plate 7. The first mounting plate 6 is attached, by brazing, only to that one side of the heat exchanger 1. According to non claimed arrangements, other attachment methods are also possible, for example welding and gluing. The second mounting plate 7 is attached releasably to the first mounting plate 6. The side of the heat exchanger 1, which the mounting assembly 5 is attached to can by any side of the heat exchanger 1, which is configured to securely attach the mounting assembly 5 to the heat exchanger 1. It means that, for example, the side of the heat exchanger 1, which is used to attach the mounting assembly 5 to the heat exchanger 1 should be sufficiently flat and/or uniform. In this embodiment of the invention the core 2 is not protected by an additional housing and the one side of the heat exchanger 1, which the mounting assembly 5 is attached to is in fact one side of the core 2 itself. For example, in case of the core 1 consisting of a pile of alternating shaped plates and flow tubes the mounting assembly 5 is attached to one of two outermost shaped plates.

In another embodiment of the present invention, not shown in the drawings, where the core 2 comprises a plurality of flow tubes arranged in a sealed housing the mounting assembly 5 can be attached to any side of the housing of the heat exchanger 1.

According to the present invention, to allow for releasable connection between the first and second mounting plates 6, 7 the first mounting plate 6 comprises, near one of its ends, a recess 61 with a through hole 62. The through hole 62 has two portions, namely a wider portion and a narrower portion. The first mounting plate 6 also includes two protrusions 63 at one of its ends, at the end opposite to the end comprising the recess 61. In turn, the second mounting plate 7 has two pockets 71, best seen in Fig. 2, situated at an end of the second mounting plate 7 corresponding to the end of the first mounting plate 6 where the protrusions 63 are located. The second mounting plate 7 also comprises a latch 72 situated generally at a position corresponding to the position of the through hole 62 of the first mounting plate 6. The latch 72 comprises a tab and a catch.

When the first and second mounting plates 6, 7 are attached to each other the latch 72, in particular its catch, first enters the wider portion of the through hole 62 in a direction perpendicular to the first mounting plate 6. Next, the second mounting plate 7 is moved in a longitudinal direction of the first and second mounting plates 6, 7 so that the pockets 71 receive the protrusions 63 and the latch 72 fits into the narrower portion of the through hole 62 and snaps elastically into it. This way the second mounting plate 7 is releasably attached to the first mounting plate 6. If one needs to disconnect the second mounting plate 7 from the first mounting plate 6, the procedure described above is simply performed in reverse order.

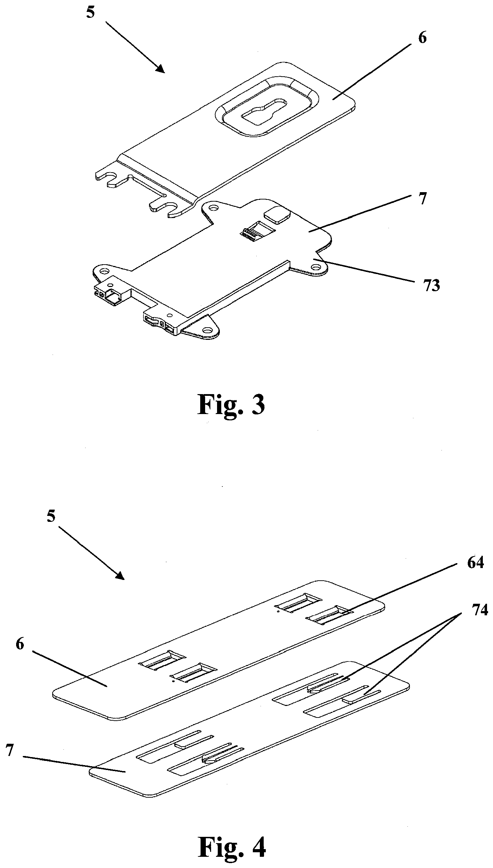

The mounting assembly 5, in particular the second mounting plate 7, has a plurality of connecting means 73, which are configured to mount the second mounting plate 7 and in result the entire heat exchanger 1 on an external structure, for example a frame of a vehicle (not shown). The connecting means 73 can comprise ball joints, which are inserted into respective seats present on the external structure, fig. 1 and 2. The connecting means 73 can also comprise tabs with through openings, which receive screws, see fig. 3.

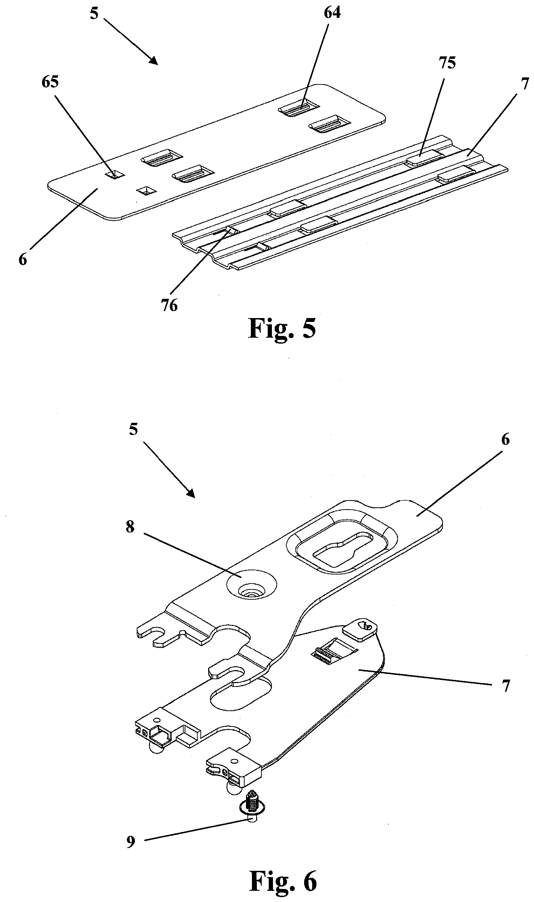

Figs. 4 and 5 show in a schematic way, with some details removed for clarity, another methods of attaching the second mounting plate 7 to the first mounting plate 6 not covered by the claims. In this example not covered by the claims the first and second mounting plates 6, 7 need not be releasably connected to one another as it is not necessary to detach the second mounting plate 7 from the first mounting plate 6. As shown in fig. 4, the first mounting plate 6 has a series of through pockets 64 with two opened ends. The second mounting plate 7 comprises a corresponding number of blocking/guiding members 74. The blocking/guiding members 74 can comprise two resilient arms, which are terminated with hooks. The blocking/guiding members 74 can also be free of the hooks. In this example not covered by the claims the second mounting plate 7 is configured to be slid longitudinally onto the first mounting plate 6. In more detail, when the second mounting plate 7 is slid onto the first mounting plate 6 the blocking/guiding members 74 enter/slide into the pockets 64 at one of their ends and then, as the sliding continues, the hooks, if present, come out of the pockets 64 at the other ends and block against edges of these ends.

In the non claimed example shown in fig. 5, the first mounting plate 6 still has the through pockets 64. The second mounting plate 7 is provided with guiding members 75, which smoothly pass through/slide into the through pockets 64, that is to say without any snap action. The relative position of the first and second mounting plates 6, 7 is secured by a set of recesses or protrusions 65 made in the first mounting plate 6 and a corresponding set of latches 76 on the second mounting plate 7 that are received in or engage the recesses or protrusions 65 and lock the second mounting plate 7 on the first mounting plate 6.

The non claimed examples shown in Figs. 4 and 5 are very easy to assembly because the second mounting plate 7 can be simply slid onto the first mounting plate 6 without having to adequately position other lathing elements to one another.

The first and second mounting plate 6, 7 can further comprise seats 8, for example in form of openings, recesses and/or hooks. The seats 8 receive additional fastening elements 9, which can be used to fasten different parts of a vehicle like hydraulic hoses, electric cables, etc.

As can be seen from the foregoing description, the second mounting plate 7 can be connected to the first mounting plate 6 in many different ways. However, a person skilled in the art will readily recognize another solutions. For example, the second mounting plate 7 can be attached to the first mounting plate 6 by a combination of lateral and longitudinal movements. It means that the second mounting plate 7 is first slid laterally onto the first mounting plate 7 from one side of the heat exchanger 1 and next the direction of movement of the second mounting plate 7 is changed by 90° so that the remaining part of the attachment movement is performed longitudinally to the mounting plates 6, 7 and the heat exchanger 1. In other words, the attachment movement follows a L-shaped path. Again, this type of connection can be made releasable or not.

Moreover, the side of the heat exchanger 2, which the first mounting plate 6 is attached to needs not be perfectly flat. This side can be for example curved or rounded, depending on the general shape of the core. If this is the case the shape of the first mounting plate 6 should correspond to the shape of this one side of the heat exchanger 1 in order to ensure secure connection between these two members.

If the heat exchanger 1 has the cuboid form, as shown in Fig. 1, that one side should be understood as any one of surfaces of the cuboid, for example the underside 4. If the heat exchanger 1 assembly takes a different form, for example cylindrical, the one side could be understood as one of a side cylindrical surface, a flat base and a flat top. Generally, in the context of the present invention the term "one side of the heat exchanger 2, which the first mounting plate 6 is attached to" should be understood as one essentially continuous surface of the heat exchanger 1 limited by respective edges/abrupt bends.

## Claims

1. A heat exchanger (1) comprising:
a core (2); and
a mounting assembly (5) attached to said core (2), said mounting assembly (5) comprising connecting means (73) configured to mount said heat exchanger (1) on an external structure;
**wherein**
said mounting assembly (5) comprises a first mounting plate (6) and a second mounting plate (7), said first mounting plate (6) being attached to only one side of said heat exchanger (1), said second mounting plate (7) being attached to said first mounting plate (6);
wherein said connecting means (73) are provided on said second mounting plate (7) **characterized in that** said first mounting plate (6) is attached to said one side of said heat exchanger (1) by brazing, wherein said second mounting plate (7) is releasably attached to said first mounting plate (6), wherein the first mounting plate 6 comprises near one of its ends a recess 61 with a through hole 62, the through hole 62 having two portions, namely a wider portion and a narrower portion, wherein the first mounting plate 6 also includes two protrusions 63 at the end opposite to the end comprising the recess 61, wherein the second mounting plate 7 has two pockets 71 situated at an end of the second mounting plate 7 corresponding to the end of the first mounting plate 6 where the protrusions 63 are located, wherein the second mounting plate 7 also comprises a latch 72 situated generally at a position corresponding to the position of the through hole 62 of the first mounting plate 6, wherein the latch 72 comprises a tab and a catch.

2. The heat exchanger (1) according to any of the preceding claims, **characterized in that** said connecting means (73) comprise a plurality of ball joints.

3. The heat exchanger (1) according to claim 1, **characterized in that** said connecting means (73) comprise a plurality of tabs with through openings.

## Patentansprüche

1. Wärmetauscher (1), umfassend:
einen Kern (2); und
eine Montageanordnung (5), die an dem Kern (2) befestigt ist, wobei die Montageanordnung (5) Verbindungsmittel (73) umfasst, die dazu ausgelegt sind, den Wärmetauscher (1) an einer externen Struktur zu befestigen;
wobei
die Montageanordnung (5) eine erste Montageplatte (6) und eine zweite Montageplatte (7) umfasst, wobei die erste Montageplatte (6) nur an einer Seite des Wärmetauschers (1) befestigt ist und die zweite Montageplatte (7) an der ersten Montageplatte (6) befestigt ist;
wobei die Verbindungsmittel (73) an der zweiten Montageplatte (7) vorgesehen sind, **dadurch gekennzeichnet, dass** die erste Montageplatte (6) an der einen Seite des Wärmetauschers (1) durch Hartlöten befestigt ist, wobei die zweite Montageplatte (7) lösbar an der ersten Montageplatte (6) befestigt ist, wobei die erste Montageplatte 6 in der Nähe eines ihrer Enden eine Aussparung 61 mit einem Durchgangsloch 62 aufweist, wobei das Durchgangsloch 62 zwei Abschnitte aufweist, nämlich einen breiteren Abschnitt und einen schmaleren Abschnitt, wobei die erste Montageplatte 6 auch zwei Vorsprünge 63 an dem Ende gegenüber dem Ende mit der Aussparung 61 aufweist, wobei die zweite Montageplatte 7 zwei Taschen 71 aufweist, die sich an einem Ende der zweiten Montageplatte 7 befinden, das dem Ende der ersten Montageplatte 6 entspricht, an dem sich die Vorsprünge 63 befinden, wobei die zweite Montageplatte 7 auch eine Verriegelung 72 aufweist, die sich im Allgemeinen an einer Position befindet, die der Position des Durchgangslochs 62 der ersten Montageplatte 6 entspricht, wobei die Verriegelung 72 eine Lasche und einen Riegel aufweist.

2. Wärmetauscher (1) gemäß einem der vorhergehenden Ansprüche, **dadurch gekennzeichnet, dass** die Verbindungsmittel (73) eine Vielzahl von Kugelgelenken umfassen.

3. Wärmetauscher (1) gemäß Anspruch 1, **dadurch gekennzeichnet, dass** die Verbindungsmittel (73) eine Vielzahl von Laschen mit Durchgangsöffnungen umfassen.

## Revendications

1. Échangeur de chaleur (1) comprenant :
un bloc (2) ; et
un ensemble de montage (5) attaché audit bloc (2), ledit ensemble de montage (5) comprenant des moyens de raccordement (73) configurés pour monter ledit échangeur de chaleur (1) sur une structure externe ;
**dans lequel**
ledit ensemble de montage (5) comprend une première plaque de montage (6) et une deuxième plaque de montage (7), ladite première plaque de montage (6) étant attachée à un seul côté dudit échangeur de chaleur (1), ladite deuxième plaque de montage (7) étant attachée à ladite première plaque de montage (6) ;
dans lequel ledit moyen de raccordement (73) est prévu sur ladite deuxième plaque de montage (7) **caractérisé en ce que** ladite première plaque de montage (6) est attachée audit un côté dudit échangeur de chaleur (1) par brasage, ladite deuxième plaque de montage (7) étant attachée de façon amovible à ladite première plaque de montage (6), la première plaque de montage 6 comprenant à proximité de l'une de ses extrémités un évidement 61 avec un trou traversant 62, le trou traversant 62 ayant deux portions, à savoir une portion plus large et une portion plus étroite, la première plaque de montage 6 incluant également deux saillies 63 au niveau de l'extrémité opposée à l'extrémité comprenant l'évidement 61, la deuxième plaque de montage 7 ayant deux poches 71 situées au niveau d'une extrémité de la deuxième plaque de montage 7 correspondant à l'extrémité de la première plaque de montage 6 où sont situées les saillies 63, la deuxième plaque de montage 7 comprenant également un verrou 72 situé généralement au niveau d'une position correspondant à la position du trou traversant 62 de la première plaque de montage 6, le verrou 72 comprenant une languette et un loquet.

2. Échangeur de chaleur (1) selon l'une quelconque des revendications précédentes, **caractérisé en ce que** lesdits moyens de raccordement (73) comprennent une pluralité de joints à rotule.

3. Échangeur de chaleur (1) selon la revendication 1, **caractérisé en ce que** lesdits moyens de raccordement (73) comprennent une pluralité de languettes avec des ouvertures traversantes.
